(19) **Europäisches Patentamt**

**European Patent Office**

**Office européen des brevets**

(11) Veröffentlichungsnummer: **0 282 689 B1**

## (12) EUROPÄISCHE PATENTSCHRIFT

(45) Veröffentlichungstag der Patentschrift: **01.04.92**

(21) Anmeldenummer: **88100211.7**

(22) Anmeldetag: **09.01.88**

(51) Int. Cl.⁵: **F01N 7/08**, F01N 7/14, F16L 51/02

(54) Flexibles Leitungselement für Abgasleitungen von Verbrennungsmotoren.

(30) Priorität: **14.03.87 DE 3708415**

(43) Veröffentlichungstag der Anmeldung:
**21.09.88 Patentblatt 88/38**

(45) Bekanntmachung des Hinweises auf die
Patenterteilung:
**01.04.92 Patentblatt 92/14**

(84) Benannte Vertragsstaaten:
**AT BE DE ES FR GB NL SE**

(56) Entgegenhaltungen:
**EP-A- 0 208 128**
**DE-A- 2 655 091**
**DE-A- 3 018 240**
**DE-A- 3 123 625**
**DE-A- 3 146 305**

(73) Patentinhaber: **Witzenmann GmbH
Metallschlauch-Fabrik Pforzheim
Östliche Karl-Friedrich-Strasse 134
W-7530 Pforzheim(DE)**

(72) Erfinder: **Schüttler, Peter
Forststrasse 18
W-7532 Niefern-Öschelbronn(DE)**

(74) Vertreter: **Lemcke, Rupert, Dipl.-Ing. et al
Patentanwälte Dipl.-Ing. R. Lemcke Dr.-Ing.
H.J. Brommer Bismarckstrasse 16 Postfach
4026
W-7500 Karlsruhe 1(DE)**

EP 0 282 689 B1

## Beschreibung

Die Erfindung betrifft ein flexibles Leitungselement für Abgasleitungen von Verbrennungsmotoren bei Kraftfahrzeugen mit einem schraubengangförmig oder ringgewellten Balg aus Metall und mit diesem beidsichtig gasdicht durch Schweißen verbundenen, im wesentlichen zylindrischen Anschlußstücken in Form von Hülsen oder Stutzen, wobei die lichte Weite des der Verbindung mit dem Balg abgewandten freien Endes der Anschlußstücke kleiner als der lichte Innenquerschnitt des Balges ist.

Derartige durch die DE-A- 26 55 091 bekannte, flexible Leitungselemente werden in der Regel als Zwischenstücke in die im übrigen starre Abgasleitung eingebaut, um Bewegungen und Schwingungen aufzunehmen und von der Weiterleitung an benachbarte Bauteile abzukoppeln, wie sie durch die elastische Lagerung der Antriebsmaschine, Erschütterungen des Fahrzeuges, temperaturänderungsbedingte Längenänderungen etc. entstehen. Dabei tritt neben der Eigenschaft der Flexibilität in zunehmenden Maße die Frage der Wärmedämmung, der Schallabsorbtion und der Dichtheit gegen Austritt von Abgaben in den Fordergrund, insbesondere in Verbindung mit Katalysatorfahrzeugen und verschärften Bestimmungen hinsichtlich Schall- und Abgasemission.

Leitungselemente der eingangs genannten Art gehören zu den von Haus aus absolut dichten Elementen.Diese müssen jedoch wegen der insbesondere im Zuge der Abgasentgiftung auftretenden immer höheren Temperaturen aus korrosionsbeständigem und damit vergleichsweise teuerem Material hergestellt werden. Im Hinblick auf die hohe Temperaturbelastung wird eine vergleichsweise große Wandstärke für den Balg erforderlich, die wiederum in ganz entscheidendem Maß die Flexibilität negativ beeinflußt, die aber gerade für ein Ausgleichselement zur Bewegungs- und Schwingungsaufnahme im Vordergrund steht. Um trotz der erheblichen Wandstarke ausreichende Flexibilität sicher zu stellen, ist man daher gezwungen, dem Leitungselement eine bedeutende Länge zu geben. Dies wiederum steigert den Material- und Kosteneinsatz, insbesondere aber den für die Unterbringung des Leitungselementes erforderlichen Raum, der jedoch bei modernen Kraftfahrzeugen im Zuge der dort verwirklichten sehr kompakten Bauweise immer knapper wird.

Um diesen Erscheinungen zu begegnen, ist es bereits bekannt, im Balg ein einseitig befestigtes Degenrohr als Wärmeschutzrohr anzuordnen, um auf diese Weise den heißen Abgasstrom von einer direkten Berührung mit der Innenseite des Balges fernzuhalten und im übrigen zwischen Degenrohr und Balg einen nicht durchströmten Zwischenraum zu schaffen, der in gewisser Weise als dämpfendes Glied in der Kette der Wärmeübertragung vom Abgas nach außerhalb des Leitungselementes dient. Diese Maßnahme setzt zwar die Belastung des das Leitungselement im wesentlichen bildenden Balges herab, so daß der Balg auf ein geringeres Belastungsprofil hin dimmensioniert, folglich etwas dünnwandiger und kürzer ausgebildet werden kann. Das so erreichte bedeutet jedoch einen verhältnismäßig kleinen Entwicklungsschritt und muß im übrigen den erheblichen Nachteil in Kauf nehmen, daß durch das erwähnte Degenrohr die Lateral- und Angularbeweglichkeit des Balges erheblich eingeschränkt wird, obwohl gerade diese bei kürzer werdendem Leitungselement in entsprechend immer höherem Maße gefordert ist.

Ein weiteres erhebliches Problem ist durch die Resonanzschwingungen gegeben, die am Balg auftreten und zu dessen rascher Zerstörung führen würden, würde der Balg nicht entsprechend stark dimensioniert und infolge dessen, dargelegt, mit einer erheblichen Länge ausgestattet.

Aufgabe der Erfindung ist es daher, für ein Leitungselement der eingangsgenannten Art eine Möglichkeit anzugeben, wie sich diese vergleichsweise sehr kurz und dünnwandig, damit also kompakt ausbilden läßt und trotzdem eine gute Schallisolierung und hohe Hitzebeständigkeit ergibt.

Diese Aufgabe ist erfindungsgemäß dadurch gelöst, daß mit der Innenseite der freien Enden der Anschlußstücke ein lose und ohne Dichtungseinlage gewickelter, zum Balg koaxial angeordneter Metallschlauch aus hitze- und korrosionsbeständigem Metall durch Schweißen verbunden ist, daß der Außenquerschnitt des Metallschlauches zur Bildung eines Ringraumes zwischen Balg und Metallschlauch kleiner als der lichte Innenquerschnitt des Balges ist, daß in dem Ringraum eine wärmedämmende, schwingungsfeste, schallabsorbierende, korrosions- und hitzebeständige Isolierlage eingebracht ist und daß die Isolierlage axial gestaucht und damit radial gegebenenfalls bis in die Profilierung des Balges und des Metallschlauches aufgeweitet sowie verdichtet ist.

Durch diese erfindungsgemäßen Maßnahmen ist mit der Isolierlage zunächst einmal sichergestellt, daß der Balg gegenüber dem Abgasstrom über eine gute Wärmeisolierung verfügt und mit dem Abgasstrom nicht in Berührung kommt, so daß bei der Dimensionierung des Balges außergewöhnliche Temperatureinflüsse ausgeschaltet sind. Darüberhinaus führt die Isolierlage insbesondere dann, wenn sie in die Balgprofilierung etwas eindringt, zu einer äußerst starken Schwingungsdämpfung für den Balg und zu einer gleichmäßigen Verteilung der Schwingungen über die gesamte Balgläge, so daß auch diesbezüglich keine übermäßige Rücksichtnahme mehr erforderlich ist. Dies alles führt dazu, daß der Balg vergleichsweise dünnwandig und damit hochflexibel ausgebildet werden kann, so daß er bereits bei geringer Länge die notwendige Axia-Lateral- und Angularbeweglichkeit aufweist.

Andererseits kann die innere Abstützung und Distanzierung der Isolierlage gegenüber dem Abgasstrom nunmehr als einfachster, äußerst lose gewickelter Metallschlauch ausgebildet sein, der dadurch einerseits die Flexibilität bzw. Beweglichkeit des Balges und damit des Leitungselementes in keiner Weise beeinträchtigt oder einschränkt, andererseits aber nicht die Gefahr des Entstehens von Klappergeräuschen od. dgl. mit sich bringt, da auch der Metallschlauch gleichermaßen durch die in seine Profilierung von außen eingreifende Isolierlage hinsichtlich der Entstehung von Schwingungen gedämpft und gehalten ist. Die innere Abstützung ist also ebenfalls hoch flexibel und setzt dem Leitungselement hinsichtlich Axial-, Lateral- und Angularbeweglichkeit keinerlei Grenzen.

Schließlich ist durch die Schweißverbindung zwischen Metallschlauch und Anschlußstücken, die als Abschluß der Montage der geschilderten- Einheit stattfindet, die Isolierlage allseitig gekammert, so daß sie keine Möglichkeit des Ausweichens hat und sich damit im Betrieb nicht eventuell allmählich auflösen kann. Bei der Montage unterstützt die Eigenschaft des Metallschlauches, in weiten Grenzen längenveränderbar zu sein, die Montage der Einheit und dabei die Möglichkeit des Zutritts zur Isolierlage, um diese zu stauchen und zu verdichten.

Zweckmäßig ist es, daß die Isolierlage im wesentlichen aus Glas- oder Mineralfasern gebildet ist. Dabei kann das Material der Isolierlage in Form eines Vlieses, eines Gewebes, eines Gestrickes oder eines Geflechtes vorliegen. Hier ist insbesondere die Verwendung einer als Geflecht ausgebildeten Isolierlage von besonderem Vorteil, da sich Geflechte unter gleichzeitiger Änderung ihres Durchmessers in weiten Grenzen in ihrer Länge ändern lassen, wobei eine Längenvergrößerung zu einer Durchmesserreduzierung und umgekehrt führt. Dies läßt sich bei der Montage dadurch ausnutzen, daß der Metallschlauch zusammen mit einer darum angeordneten Isolierlage aus einem Geflecht in die äußerste Strecklage gebracht wird, um so in den Balg ohne Schwierigkeiten eingeschoben werden zu können. Im Anschluß daran wird dann der Metallschlauch zusammen mit der Isolierlage auf die Einbaulänge zuzammengeschoben, wodurch die Isolierlage sich gleichmäßig über die gesamte Länge in ihrem Durchmesser zu vergrößern sucht, was wiederum dazu führt, daß das Material der Isolierlage verdichtet und gleichzeitig von innen in die Profilierung des Balges und von außen in die Profilierung des Metallschlauches gedrückt wird, so daß sich hier ein guter gegenseitiger Verebund ergibt, der eine hohe Schwingungsdämpfung in über die gesamte Länge des Leitungselementes gleichmäßiger Verteilung gewährleistet.

In diesem Zusammenhang kann es vorteilhaft sein, daß die Isolierlage zweischichtig ausgebildet ist insbesondere in dem Sinne, daß einer radial innen liegenden Schicht von Anfang an eine höhere Dichte und Temperaturbeständigkeit gegeben wird, während die äußere Schicht mehr auf die Schaffung eines guten formschlüssigen Verbundes mit dem Balg ausgelegt ist. So kann also insbesondere die innere Schicht der Isolierlage ein Vliesstoff sein, während die äußere Schicht als Geflecht des Isoliermaterials ausgebildet ist.

Weiterhin kann es vorteilhaft sein, -daß das Material der Isolierlage eine Beimengung aus hitze- und korrosionsbeständigen Metallfasern enthält, um dadurch die innere Festigkeit und Tragfähigkeit der Isolierlage zu erhöhen.

Im Hinblick auf die weitere Ausbildung des Leitungselementes kann vorgesehen sein, daß die Anschlußstücke balgseitig eine bis auf den Außenquerschnitt des Balges geführte Aufbördelung aufweisen sowie im Bereich dieses Außenquerschnittes mit dem Balg verschweißt sind. Ist dann der Balg mit einem Schlauch aus Drahtgeflecht ummantelt, um dem Balg zusätzlich gegen äußere mechanische Beeinflussung und Verschmutzungen zu schützen, so können die Schlauchenden des Drahtgeflechtes ebenfalls durch die Verschweißung zwischen Anschlußstücken und Balg erfaßt sein.

Darüber hinaus kann es dann zweckmäßig sein, daß die Anschlußstücke ausgehend von den Aufbördelungen einen sich koaxial über einen Teil der Balg- bzw. Schlauchlänge erstreckenden zylindrischen Fortsatz aufweisen, um gerade die Enden des Balges und gegebenenfalls des Geflechtsschlauches im Bereich der Anschlußverbindung zu schützen. Hier ist es schließlich zweckmäßig, daß der Fortsatz zu seinem freien Ende hin trompetenförmig aufgeweitet ist, um im Rahmen der Angular- und Lateralbeweglichkeit des Leitungselementes nicht im Wege zu stehen.

Was die Ausbildung des Metallschlauches des erfindungsgemäßen Leitungselementes betrifft, so ist es zweckmäßig, diesen als Agraffschlauch auszubilden.

Dabei kann vorgesehen sein, daß der Agraffschlauch eine ßandprofilierung mit sich hinterhakenden Bandkanten aufweist. Hier findet also eine solche Ausbildung des Agraffschlauches Verwendung, bei dem die Bandkanten nicht nur in Axialrichtung des Schlauches dessen Längenänderungen begrenzen, sondern auch in Radialrichtung dafür sorgen, daß die einzelnen Schlauchwicklungen gegeneinander festgelegt sind, wobei ein im Rahmen dieser Festlegung gewünschtes Spiel durch entsprechende Ausbildung der Bankprofilierung gewählt werden kann.

Der Metallschlauch, insbesondere in seiner Ausbildung als Agraffschlauch kann einen kreisförmigen Querschnitt aufweisen, wie er im Normalfalle aus Gründen der einfachen Herstellung zweckmäßig ist.

Es besteht jedoch auch die Möglichkeit, daß der Metallschlauch einen vieleckigen Querschnitt aufweist, was nicht nur dazu führt, daß sich benachbarte und ineinander greifende Windungen des Metallschlauches nur in engen Grenzen gegeneinander verdrehen können, sondern was auch dazu führt, daß die Isolierlage in Umfangsrichtung eine gewisse zusätzliche Festlegung gegen Verrutschen erfährt.

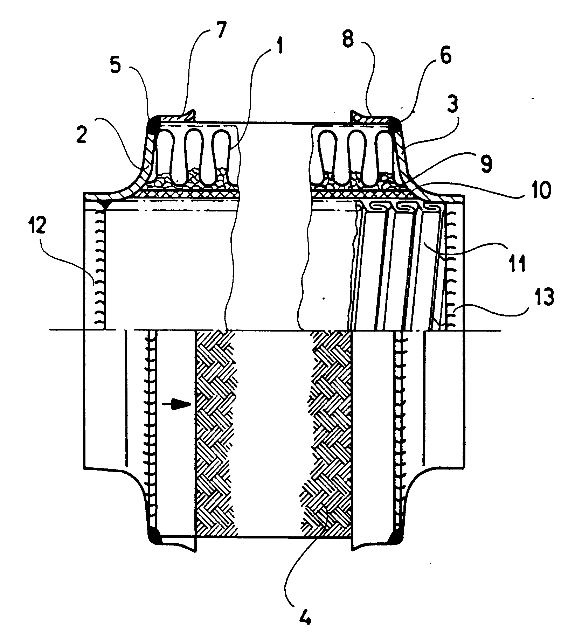

Weitere Merkmale und Einzelheiten der Erfindung ergeben sich aus der nachfolgenden Beschreibung einer Ausführungsform anhand der Zeichnung, die ein Leitungselement in Seitenansicht, teilweise im Axialschnitt zeigt.

In der Zeichnung ist ein ringgewellter Metallbalg 1 mit Kreisquerschnitt dargestellt, dessen Enden im Bereich des Balgaußendurchmessers mit Anschlußstücken 2, 3 in Form von Metallhülsen verschweißt sind. Dabei ist ein den Balg 1 außen umgebender Schlauch 4 aus einem Metallgeflecht mitverschweißt, der den Balg gegen äußere mechanische Beeinträchtigung und Verschmutzung schützt. Ausgehend von den Schweißstellen 5, 6 weisen die Anschlußstücke 2, 3 außerdem Fortsätze 7, 8 auf, die den Balg 1 und den Schlauch 4 im Bereich der Schweißverbindungen 5, 6 stützen und außerdem endständig trompetenförmig aufgeweitet sind, um Angular- und Lateralbewegungen des Balges und des Schlauches ohne das Auftreten einer Kantenpressung zuzulassen.

Innerhalb des Balges 1 ist eine aus zwei Schichten 9, 10 aufgebaute Isolierlage aus Mineral- oder Glasfasern angeordnet, wobei die Schicht 9 ein durch Stauchung aufgeweitetes Geflecht des Isoliermaterials und die Schicht 10 ein durch Stauchen verdichtetes Vlies des Isoliermaterials sein kann. Die Isolierlage 9, 10 erstreckt sich über die gesamte Länge des Balges 1 und ist nach radial innen durch einen lose ohne Dichtungseinlage gewickelten Agraffschlauch 11 abgestützt, dessen Außendurchmesser um die gewünschte Dicke der Isolierlage kleiner als der Innendurchmesser des Balges 1 ist, und dessen Außendurchmesser im übrigen dem lichten Querschnitt der freien Enden der Anschlußstücke 2, 3 entspricht, so daß er dort bei 12 und 13 durch Schweißen mit den Anschlußstücken 2, 3 fest verbunden sein kann.

Dadurch, daß der Agraffschlauch 11 lose, also unter erheblichem gegenseitigen Spiel der ineinandergreifenden Schlauchwindungen gewickelt ist, hat der Agraffschlauch 11 in Axial-, Angular- und Lateralrichtung völlig ungehinderte Bewegungsfreiheit, so daß er die gleichermaßen gegebene Flexibilität bzw. Beweglichkeit des Balges 1 in keiner Weise beeinträchtigt. Dies führt andererseits nicht zu einer Gefahr des Klapperns der Agraffschlauchwindungen, weil ebenso wie bezüglich des Balges 1 das Material der Dichtlage 9, 10 durch deren Stauchung etwas in die Profilierung von Balg 1 und Agraffschlauch 11 eindringt und damit diese Teile bzw. die gegenseitige Bewegung deren benachbarter Windungen bzw. Wellungen in einer über die gesamte Länge des Leitungselementes gleichmäßig verteilten Weise dämpft.

Die Isolierlage 9, 10 führt insgesamt dazu, daß der Balg 1 bezüglich der abgasbedingten Wärmebelastung vom Abgasstrom abgekoppelt ist, so daß der Balg dünnwandig und kurz ausgebildet sein kann, ohne damit verglichen mit bekannten Bälgen an Beweglichkeit und Leistungsfähigkeit insbesondere hinsichtlich Lebensdauer zu verlieren.

Hinsichtlich der Herstellung bzw. der Montage des dargestellten Leitungselementes kann man beispielsweise so vorgehen, daß zunächst mit dem Anschlußstück 2 der Balg 1 und der Geflechtsschlauch 4 verschweißt wird. Anschließend wird eine aus Agraffschlauch 11 und über dessen gesamte Länge darum angeordnete Isolierlage 9, 10 von rechts nach links in den Balg 1 eingeschoben, wobei sich die Isolierlage von links her dadurch verdichtet und radial vergrößert, daß der Agraffschlauch weiter bis in den freien Querschnitt des Anschlußstückes 2 bewegt wird, um dort angeschweißt zu werden.

Anschließend wird die Isolierlage von ihrem rechten Ende aus gestaucht und damit verdichtet sowie radial vergrößert, beispielsweise durch das Aufstecken des rechten Anschlußstückes 3, das dann anschließend bei 6 mit dem Balg 1 und dem Geflechtsschlauch 4 verschweißt wird. Als letztes findes dann die Schweißverbindung zwischen Anschlußstück 3 und Agraffschlauch 11 bei 13 statt.

Je nach den Gegebenheiten des Einzelfalles kann das Material der Isolierlage 9, 10 durch eine Beimengung von Metallfasern verstärkt und verfestigt sein.

Das so erstellte Leitungselement zeichnet sich durch hohe Beweglichkeit aus und ist andererseits mit einer starken Schwingungsdämpfung und Wärmeisolierung ausgestattet, womit es auf kleinem Einbauraum alle hier in Zusammenhang mit modernen Abgasanlagen auftretenden Forderungen in betriebssicherer Weise zu erfüllen vermag. Schließlich stellt das Leitungselement eine in ihrer Gesamtheit vorfertigbare, abgeschlossene und damit transportfähige Einheit dar, die insoweit bei ihrem Einbau vor Ort keiner besonderen Handhabung mehr bedarf.

**Patentansprüche**

1. Flexibles Leitungselement für Abgasleitungen von Verbrennungsmotoren bei Kraftfahrzeugen mit einem schraubengangförmig oder ringgewellten Balg (1) aus Metall und mit diesem beidseitig gasdicht durch Schweißen verbundenen, im wesentlichen zylindrischen Anschlußstücken (2, 3) in Form von Hülsen oder Stutzen, wobei die lichte Weite des der Verbindung mit dem Balg (1) abgewandten freien Endes der Anschlußstücke (2, 3) kleiner als der lichte Innenquerschnitt des Balges (1) ist, dadurch gekennzeichnet,
daß mit der Innenseite der freien Enden der Anschlußstücke (2, 3) ein lose und ohne Dichtungseinlage gewickelter, zum Balg (1) koaxial angeordneter Metallschlauch (11) aus hitze- und korrosionsbeständigem Metall durch Schweißen (12, 13) verbunden ist, daß der Außenquerschnitt des Metallschlauches (11) zur Bildung eines Ringraumes zwischen Balg (1) und Metallschlauch (11) kleiner als der lichte Innenquerschnitt des Balges (1) ist, daß in den Ringraum eine wärmedämmende, schwingungsfeste, schallabsorbierende, korrosions- und hitzebeständige Isolierlage (9, 10) eingebracht ist und daß die Isolierlage (9, 10) axial gestaucht und damit radial gegebenenfalls bis in die Profilierung des Balges (1) und des Metallschlauches (11) aufgeweitet sowie verdichtet ist.

2. Leitungselement nach Anspruch 1, dadurch gekennzeichnet, daß die Isolierlage (9, 10) im wesentlichen aus Glas- oder Mineralfasern gebildet ist.

3. Leitungselement nach Anspruch 1 oder 2, dadurch gekennzeichnet, daß das Material der Isolierlage ein Vlies ist.

4. Leitungselement nach Anspruch 1 oder 2, dadurch gekennzeichnet, daß das Material der Isolierlage ein Gewebe ist.

5. Leitungselement nach Anspruch 1 oder 2, dadurch gekennzeichnet, daß das Material der Isolierlage ein Gestricke ist.

6. Leitungselement nach Anspruch 1 oder 2, dadurch gekennzeichnet, daß das Material der Isolierlage ein Geflecht ist.

7. Leitungselement nach Anspruch 1 oder 2, dadurch gekennzeichnet, daß die Isolierlage (9, 10) zweischichtig ausgebildet ist.

8. Leitungselement nach Anspruch 7, dadurch gekennzeichnet, daß die innere Schicht (10) der Isolierlage ein Vlies und die äußere (9) ein Geflecht ist.

9. Leitungselement nach einem der vorhergehenden Ansprüche, dadurch gekennzeichnet, daß das Material der Isolierlage (9, 10) eine Beimengung aus hitze- und korrosionsbeständigen Metallfasern enthält.

10. Leitungselement nach Anspruch 1, dadurch gekennzeichnet, daß die Anschlußstücke (2, 3) balgseitig eine bis auf den Außenquerschnitt des Balges geführte Aufbördelung aufweisen sowie im Bereich dieses Außenquerschnittes mit dem Balg verschweißt (5, 6) sind.

11. Leitungselement nach Anspruch 10, dadurch gekennzeichnet, daß der Balg (1) mit einem Schlauch (4) aus Drahtgeflecht ummantelt ist und die Schlauchenden ebenfalls durch die Verschweißung (5, 6) zwischen Anschlußstükken (2, 3) und Balg (1) erfaßt sind.

12. Leitungselement nach Anspruch 10 oder 11, dadurch gekennzeichnet, daß die Anschlußstücke (2,3) ausgehend von den Aufbördelungen einen sich koaxial über einen Teil der Balg- bzw. Schlauchlänge erstreckenden zylindrischen Fortsatz (7,8) aufweisen.

13. Leitungselement nach Anspruch 12, dadurch gekennzeichnet, daß der Fortsatz (7,8) zu seinem freien Ende hin trompetenförmig aufgeweitet ist.

14. Leitungselement nach einem der vorhergehenden Ansprüche, dadurch gekennzeichnet, daß der Metallschlauch (11) aus rostfreiem Stahl besteht.

15. Leitungselement nach einem der vorhergehenden Ansprüche, dadurch gekennzeichent, daß der Metallschlauch (11) ein Agraffschlauch ist.

16. Leitungselement nach Anspruch 15, dadurch gekennzeichnet, daß der Agraffschlauch (11) eine Bandprofilierung mit sich hinterhakenden Bandkanten aufweist.

17. Leitungselement nach einem der vorhergehenden Ansprüche, dadurch gekennzeichnet, daß der Metallschlauch einen kreisförmigen Querschnitt aufweist.

18. Leitungselement nach einem der Ansprüche 1-16, dadurch gekennzeichnet, daß der Metallschlauch einen vieleckigen Querschnitt aufweist.

**Claims**

1.  Flexible conduit element for exhaust conduits of internal combustion engines in motor vehicles having a bellows element (1) of metal in helical or annularly corrugated form, and substantially cylindrical attachment pieces (2, 3) in the form of sleeves or props connected by welding on both sides gas-tightly with the bellows element, the clear internal width of the free end of the attachment pieces (2, 3) which is remote from the connection with the bellows element (1) being smaller than the clear internal cross-section of the bellows element (1), characterised in that a metal hose (11) of heat-resistant and corrosion-resistant metal, wound loosely and without sealing inlay and arranged coaxially with the bellows element (1) is connected by welding (12, 13) with the inner side of the free ends of the attachment pieces (2, 3), in that the external cross-section of the metal hose (11) for the formation of an annular space between bellows element (1) and metal hose (11) is smaller than the clear internal cross-section of the bellows element (1), in that into the annular space there is placed a thermally insulating, sound-absorbing, corrosion and heat resistant insulating layer (9, 10) and in that the insulating layer (9, 10) is axially upset and thus radially widened, possibly into the profiling of the bellows element (1) and of the metal hose (11), and compacted.

2.  Conduit element according to Claim 1 or 2, characterised in that the insulating layer (9, 10) is formed essentially from glass fibres or mineral fibres.

3.  Conduit element according to Claim 1 or 2, characterised in that the material of the insulating layer is a fleece.

4.  Conduit element according to Claim 1 or 2, characterised in that the material of the insulating layer is a woven fabric.

5.  Conduit element according to Claim 1 or 2, characterised in that the material of the insulating layer is a knitted fabric.

6.  Conduit element according to Claim 1 or 2, characterised in that the material of the insulating layer is a braided fabric.

7.  Conduit element according to Claim 1 or 2, characterised in that the insulating layer (9, 10) is made in two layers.

8.  Conduit element according to Claim 7, characterised in that the inner layer (10) of the insulating layer is a fleece and the outer (9) is a braided fabric.

9.  Conduit element according to any one of the preceding Claims, characterised in that the material of the insulating layer (9,10) contains an admixture of heat-resistant and corrosion-resistant metal fibres.

10. Conduit element according to Claim 1, characterised in that the attachment pieces (2, 3) comprise on the bellows side an upwardly crimped portion conducted as far as the outer cross-section of the bellows, and are welded (5, 6) with the bellows in the region of this outer cross-section.

11. Conduit element according to Claim 10, characterised in that the bellows element (1) is jacketed with a hose (4) of braided wire, and the hose ends are likewise grasped by the weld (5, 6) between attachment pieces (2, 3) and bellows (1).

12. Conduit element according to Claim 10 or 11, characterised in that the attachment pieces (2, 3), starting from the crimped-up parts, comprise a cylindrical continuation (7, 8) extending coaxially over a part of the bellows length or hose length.

13. Conduit element according to Claim 12, characterised in that the extension (7, 8) is widened in trumpet form towards its free end.

14. Conduit element according to any one of the preceding Claims, characterised in that the metal hose (11) consists of stainless steel.

15. Conduit element according to any one of the preceding Claims,characterised in that the metal hose (11) is a hook engagement hose.

16. Conduit element according to Claim 15, characterised in that the hook engagement hose (11) comprises a strip profiling with strip edges hooking one behind another.

17. Conduit element according to any one of the preceding Claims, characterised in that the metal hose possesses a circular cross-section.

18. Conduit element according to one of Claims 1 - 16, characterised in that the metal hose possesses a polygonal cross-section.

## Revendications

1. Élément de conduite flexible pour tuyaux d'échappement de moteurs à combustion interne dans des véhicules automobiles, comportant un manchon métallique (1) en forme de filetage hélicoïdal ou à ondulations annulaires et des éléments sensiblement cylindriques de raccordement (2,3), qui sont raccordés des deux côtés à ce manchon d'une manière étanche aux gaz par soudage et se présentent sous la forme de douilles ou de tubulures, le diamètre intérieur de l'extrémité libre des éléments de raccordement (2,3), tournée à l'opposé de la liaison avec le manchon (1), étant inférieur à la section intérieure libre du manchon (1),
caractérisé par le fait
qu'à la face intérieure des extrémités libres des éléments de raccordement (2,3) est raccordé un tuyau métallique (11) enroulé de façon lâche, sans insert d'étanchéité, et disposé coaxialement au manchon (1) et réalisé en un métal résistant à la chaleur et à la corrosion, et raccordé par soudage (12,13) à la face intérieure des extrémités libres des éléments de raccordement (2,3), que, pour la formation d'un espace annulaire entre le manchon (1) et le tuyau métallique (11), la section transversale extérieure du tuyau métallique (11) est inférieure à la section transversale intérieure libre du manchon (1), qu'une couche thermiquement isolante (9,10), qui résiste aux vibrations, réalise une atténuation acoustique et est résistante à la corrosion et à la chaleur, est insérée dans l'espace annulaire et que la couche isolante (9,10) est comprimée axialement et par conséquent est déployée ou comprimée éventuellement radialement jusque dans le profil du manchon (1) et du tuyau métallique (11).

2. Élément de conduite selon la revendication 1, caractérisé en ce que la couche isolante (9,10) est formée essentiellement par des fibres de verre ou des fibres minérales.

3. Élément de conduite selon la revendication 1 ou 2, caractérisé en ce que le matériau de la couche isolante est une nappe non tissée.

4. Élément de conduite selon la revendication 1 ou 2, caractérisé en ce que le matériau de la couche isolante est un tissu.

5. Élément de conduite selon la revendication 1 ou 2, caractérisé en ce que le matériau de la couche isolante est un tricot.

6. Élément de conduite selon la revendication 1 ou 2, caractérisé en ce que le matériau de la couche isolante est un treillis.

7. Élément de conduite selon la revendication 1 ou 2, caractérisé en ce que la couche isolante (9,10) comprend deux couches.

8. Élément de conduite selon la revendication 7, caractérisé en ce que la couche intérieure (10) de la couche isolante est une nappe non tissée et que la couche extérieure (9) est un treillis.

9. Élément de conduite selon l'une des revendications précédentes, caractérisé en ce que le matériau de la couche isolante (9,10) contient une addition de fibres métalliques résistantes à la chaleur et à la corrosion.

10. Élément de conduite selon la revendication 1, caractérisé en ce que les éléments de raccordement (2,3) possèdent, du côté du manchon, un rebord s'étendent jusqu'au niveau de la section transversale extérieure du manchon et sont soudés (5,6) au manchon au niveau de cette section transversale extérieure.

11. Élément de conduite selon la revendication 10, caractérisé en ce que le manchon (1) est entouré par un tuyau (4) formé d'un treillis en fil et que les extrémités du tuyau sont également retenues par le soudage (5,6) entre les éléments de raccordement (2,3) et le manchon (1).

12. Élément de conduite selon la revendication 10 ou 11, caractérisé en ce que les éléments de raccordement (2,3) possèdent, à partir des rebords, un prolongement cylindrique (7,8) qui s'étend coaxialement sur une partie de la longueur du manchon ou du tuyau.

13. Élément de conduite selon la revendication 12, caractérisé en ce que le prolongement (7,8) s'élargit en forme de trompette en direction de son extrémité libre.

14. Élément de conduite selon l'une des revendications précédentes, caractérisé en ce que le tuyau métallique (11) est réalisé en acier inoxydable.

15. Élément de conduite selon l'une des revendications précédentes, caractérisé en ce que le tuyau métallique (11) est un tuyau à agrafage.

**16.** Élément de conduite selon la revendication 15, caractérisé en ce que le tuyau à agrafage (11) possédé un profil en forme de bande dont les bords s'accrochent les uns derrière les autres.

**17.** Élément de conduite selon l'une des revendications précédentes, caractérisé en ce que le tuyau métallique possède une section transversale circulaire.

**18.** Élément de conduite selon l'une des revendications 1-16, caractérisé en ce que le tuyau métallique possède une section transversale polygonale.